# EUROPÄISCHE PATENTANMELDUNG

(11) **EP 4 685 641 A1**
(43) Veröffentlichungstag der Anmeldung: **28.01.2026**
(21) Anmeldenummer: 24191230.2
(22) Anmeldetag: 26.07.2024
(51) Int. Cl.: G06F 9/48, G06F 9/50

(54) **REAL-TIME KONFIGURATION MODULARISIERTER AUTOMATISIERUNGSAPPLIKATIONEN MIT EFFIZIENTER RESSOURCENNUTZUNG**

(71) Anmelder: Siemens Aktiengesellschaft, 80333 München (DE)
(72) Erfinder: Mössner, Rudolf, 93133 Burglengenfeld (DE); Ottermann, Johannes, 92224 Amberg (DE); Pokorny, Andreas, 91058 Erlangen (DE); Schmidt, Steffen, 91230 Happurg (DE); Hnaien, Iheb, 80809 München (DE); Ivanov, Petr, 90473 Nürnberg (DE); Ockel, Alexander, 74182 Obersulm (DE); Sathya, Gayathery, 92224 Amberg (DE); Schmidt, Ines, 92421 Schwandorf (DE); Steindl, Johanna, 92284 Poppenricht (DE)
(74) Vertreter: Siemens Patent Attorneys

(57) **Zusammenfassung**

Die vorliegende Erfindung betrifft ein Computer-implementiertes Verfahren, eine Computerimplementierte Vorrichtung, ein System sowie ein Computerprogrammprodukt zur Ressourcenzuweisung an N, mit N ≥ 2, Echtzeit-Softwaremodule, welche auf einem gleichen Hardwaresystem unabhängig voneinander ausgeführt werden, umfassend Bereitstellen einer Ressourcenbedarfskonfiguration für jedes der N Echtzeit-Softwaremodule, wobei die Ressourcenbedarfskonfiguration einen Ressourcenbedarf zum Betreiben eines jeweiligen Softwaremoduls anzeigt, Bereitstellen einer Ressourcenangebotskonfiguration, welche ein Ressourcenangebot des Hardwaresystem anzeigt, Vergleichen des durch die Ressourcenangebotskonfiguration angezeigten Ressourcenangebots mit dem durch die Ressourcenbedarfskonfiguration angezeigten Ressourcenbedarfs, Bestimmen, basierend auf dem Vergleichen, ob das durch die Ressourcenangebotskonfiguration angezeigte Ressourcenangebot ausreichend ist, um die N Echtzeit-Softwaremodule auf dem Hardwaresystem auszuführen, Erstellen einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist sowie Übergeben der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration.

## Beschreibung

Die vorliegende Erfindung betrifft ein Computer-implementiertes Verfahren, eine Computer-implementierte Vorrichtung, ein System sowie ein Computerprogrammprodukt zur Ressourcenzuweisung an N, mit N ≥ 2, Echtzeit-Softwaremodule, welche auf einem gleichen Hardwaresystem unabhängig voneinander ausgeführt werden.

Die Automatisierung industrieller Fertigungsanlagen ist ein nicht mehr wegzudenkender Prozess der Weiterentwicklung moderner Fertigungsstraßen. Hierzu bedarf es in vielen Fällen der Entwicklung von Softwarelösungen (z.B. in Form von Softwaremodulen), welche zumindest teilweise eine Automatisierung ggf. bisher manuell ausgeführter Steuerungsaufgaben übernehmen können.

Diese Softwaremodule können in einigen Fällen Steuerungsaufgaben übernehmen, welche keinerlei Zeitrestriktionen unterworfen sind (z.B. Steuerungsaufgaben, deren Ausführung lediglich (zeitnah) erfolgen sollte) und solchen Steuerungsaufgaben, welche innerhalb vordefinierter Zeitintervalle abgeschlossen sein müssen (sog. Echtzeitsysteme, welche besondere Anforderungen an eine Laufzeitumgebung stellen können). In letzterem Fall können die Steuerungsaufgaben, welche innerhalb vordefinierter Zeitintervalle abgeschlossen sein müssen, noch in solche mit harten Echtzeitanforderungen (d.h. Anforderungen, deren Verletzung zu einem Systemausfall führen) und solche mit weichen Echtzeitanforderungen (d.h. Anforderungen, deren Verletzung nicht zwangsläufig zu einem Systemausfall führen würde) unterschieden werden.

Unabhängig von den zeitlichen Anforderungen an die Steuerungsaufgaben, ist es erforderlich, den jeweiligen Softwaremodulen Ressourcen zuzuweisen, damit diese auf einem Hardwaresystem ausgeführt werden können. Häufig erfolgt die Zuweisung der Ressourcen während der Laufzeit, d.h. dann, wenn die Ressourcen von den Softwaremodulen tatsächlich auch benötigt werden. Problematisch kann hierbei jedoch sein, dass die physisch vorhandenen Ressourcen in der Regel limitiert sind und die von den jeweiligen Softwaremodulen benötigten Ressourcen die physikalisch vorhandenen Ressourcen übersteigen können.

Erschwerend kann hinzukommen, dass während der Entwicklung der jeweiligen Softwaremodule das Ressourcenangebot des Hardwaresystems, auf welchem das Softwaremodul später zur Ausführung gebracht werden soll, nicht bekannt ist. Mit anderen Worten, die Entwicklung der Softwaremodule erfolgt meist unabhängig vom physikalisch verfügbaren Ressourcenangebot.

Dies kann insbesondere bei der Zuweisung von physikalischen Ressourcen zu Softwaremodulen zu Problemen führen, da ggf. die von dem Softwaremodul erforderliche Ressourcenzuweisung, d.h. der Ressourcenbedarf physikalisch nicht verfügbar sein kann. Dies kann darauf basieren, dass entsprechende Ressourcen durch das verwendete Hardwaresystem nicht zur Verfügung gestellt werden können, z. B. weil das Hardwaremodul nie ausreichend Ressourcen aufwies oder weil entsprechende Ressourcen bereits anderen Softwaremodulen zugewiesen wurden (z.B. dann, wenn mehrere Softwaremodule auf einem gleichen Hardwaresystem zur Ausführung gebracht werden sollen).

Da viele Automatisierungsaufgaben den Einsatz von Echtzeitsystemen erfordern, an welche besondere Anforderungen hinsichtlich der Ressourcenzuweisung zu stellen sind, ist eine Zuweisung von Ressourcen zur Laufzeit häufig nicht zielführend, da in vielen Fällen die durch die Echtzeitsysteme hervorgerufene Kritikalität nicht erfüllt werden kann. Dies kann z.B. darauf basieren, dass die zur Laufzeit an das Echtzeitsystem zuzuweisenden Ressourcen nicht verfügbar sind. In derartigen Fällen kann eine Einhaltung einer Zeitkritikalität nicht in allen Fällen in zufriedenstellender Weise erfüllt werden. Verschärft wird dieses Problem weiter, wenn mehrere Echtzeit-Softwaremodule auf dem gleichen Hardwaresystem gleichzeitig zum Einsatz kommen sollen.

Eine mögliche Problemlösung kann z.B. dadurch erreicht werden, alle Echtzeit-Softwaremodule innerhalb einer (monolithischen) Applikation zu entwickeln und dabei während der Entwicklung aufeinander abzustimmen. Dies kann jedoch zu einer erschwerten Wartbarkeit des Systems führen und nachträgliche Änderungen der Echtzeit-Softwaremodule unerwünscht erschweren.

Zusätzlich oder alternativ kann vorgesehen sein, dass Echtzeit-Softwaremodule im selben Prozessraum ablaufen können. In einem derartigen Fall können z.B. einem Automatisierungsingenieur alle Details aller zu implementierender Echtzeit-Softwaremodule bekannt sein, so dass dieser eine zentrale und für das Hardwaresystem spezifische Konfiguration unter Berücksichtigung aller (impliziten) Anforderungen erstellen kann. Die Teilfunktionen können so bei der Entwicklung an die Zielhardware angepasst werden.

In anderen Fällen kann es auch möglich sein, dass ganze Ressourcen (z.B. ein gesamter Arbeitsspeicher oder zumindest eine ganze Arbeitsspeichereinheit) in grober Granularität an das jeweilige Softwaremodul (welches zumindest einige Echtzeitkomponenten aufweist) zugewiesen werden. Dies kann jedoch, insbesondere bei leichtgewichtigeren real-time Modulen zu einem großen Ressourcenverschnitt führen und damit zu einer ineffizienten Ressourcennutzung (wie dies z.B. von bekannten Virtualisierungsumgebungen bekannt ist).

Es besteht daher Bedarf nach einem verbesserten Verfahren zur Zuweisung von Ressourcen eines Hardwaresystems an Softwaremodule, insbesondere an Echtzeit-Softwaremodule, wobei die oben beschriebenen Nachteile zumindest teilweise überwunden werden.

Die vorliegende Erfindung stellt sich daher die technische Aufgabe eine verbesserte Ressourcenzuweisung an mehrere Echtzeit-Softwaremodule bereitzustellen, welche auf dem gleichen Hardwaresystem ausgeführt werden.

Dies wird erreicht durch einen ersten Aspekt der vorliegenden Erfindung, welcher sich auf ein Computer-implementiertes Verfahren zur Ressourcenzuweisung an N, mit N ≥ 2, Echtzeit-Softwaremodule, welche auf einem gleichen Hardwaresystem unabhängig voneinander ausgeführt werden, bezieht. Das Verfahren kann ein Bereitstellen einer Ressourcenbedarfskonfiguration für jedes der N Echtzeit-Softwaremodule umfassen, wobei die Ressourcenbedarfskonfiguration einen Ressourcenbedarf zum Betreiben eines jeweiligen Softwaremoduls anzeigt. Das Computer-implementierte Verfahren kann ein Bereitstellen einer Ressourcenangebotskonfiguration, welche ein Ressourcenangebot des Hardwaresystem anzeigt, umfassen sowie ein Vergleichen des durch die Ressourcenangebotskonfiguration angezeigten Ressourcenangebots mit dem durch die Ressourcenbedarfskonfiguration angezeigten Ressourcenbedarfs. Ferner kann das Computer-implementierte Verfahren auch ein Bestimmen, basierend auf dem Vergleichen, umfassen, ob das durch die Ressourcenangebotskonfiguration angezeigte Ressourcenangebot ausreichend ist, um die N Echtzeit-Softwaremodule auf dem Hardwaresystem auszuführen sowie ein Erstellen einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist. Ferner kann das Computer-implementierte Verfahren ein Übergeben der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration umfassen.

Unter einer Ressourcenzuweisung kann in diesem Kontext ein Zuweisen von durch das Hardwaresystem zur Verfügung gestellten Ressourcen an eine die Ressourcen anfordernde Entität (z.B. ein Echtzeit-Softwaremodul) verstanden werden.

Die Ressourcenbedarfskonfiguration kann jeweils sowohl für ein erstes Echtzeit-Softwaremodul als auch für ein zweites Echtzeit-Softwaremodul bereitgestellt werden. Die entsprechenden Ressourcenbedarfskonfigurationen können sich für das erste Echtzeit-Softwaremodul und für das zweite Echtzeit-Softwaremodul voneinander unterscheiden. Alternativ kann es auch möglich sein, dass die Ressourcenangebotskonfiguration für das erste Echtzeit-Softwaremodul identisch mit der Ressourcenangebotskonfiguration für das zweite Echtzeit-Softwaremodul ist.

Die Ressourcenbedarfskonfiguration kann indikativ sein für Mindestressourcen, die einem Echtzeit-Softwaremodul zugewiesen werden müssen, damit dieses auf dem Hardwaresystem ausgeführt werden kann.

Die Ressourcenbedarfskonfiguration kann in einigen Fällen zum Zeitpunkt der Entwicklung des Echtzeit-Softwaremoduls bereits bekannt sein.

In einigen Beispielen können die N Echtzeit-Softwaremodule in einem gleichen Prozessraum auf dem gleichen Hardwaresystem zur Ausführung gebracht werden.

Das Vergleichen kann ein Bestimmen umfassen, ob die durch die Ressourcenangebotskonfiguration angezeigten zur Verfügung stehenden Ressourcen zumindest den für ein Ausführen der N Echtzeit-Softwaremodule erforderlichen Ressourcenbedarf überschreiten. In einem derartigen Fall kann gefolgert werden, dass die durch die Ressourcenangebotskonfiguration angezeigten, zur Verfügung stehenden Ressourcen ausreichend sind, um Ressourcen der Ressourcenangebotskonfiguration auf Ressourcen der Ressourcenbedarfskonfiguration abzubilden.

Dies kann den Vorteil bieten, dass nicht eine einzelne Entität (z.B. eine einzelne Person, wie z.B. ein Entwickler eines Echtzeit-Softwaremoduls) eine Gesamtlösung aller für die Implementierung notwendiger Aspekte vorhalten muss. Dies kann dadurch erreicht werden, indem der Ressourcenbedarf der einzelnen Echtzeit-Softwaremodule und das Ressourcenangebot des Hardwaresystem abstrahiert, wohldefiniert und explizit bekannt gemacht werden (z.B. durch die Ressourcenangebotskonfiguration sowie durch die Ressourcenbedarfskonfiguration).

Ferner kann auf diese Weise ermöglicht werden, dass auf dem gleichen Hardwaresystem mehrere (d.h. zumindest zwei) Echtzeit-Softwaremodule implementiert und ausgeführt werden können. Dies kann zu einer vielseitigeren und damit effizienteren Nutzung des Hardwaresystems beitragen.

Ferner kann auf diese Weise ermöglicht werden, jedes der zumindest zwei Realtime-Softwaremodule auf unterschiedlichen Hardwaresystemen auszuführen ohne Änderungen an den Echtzeit-Softwaremodulen vornehmen zu müssen. Dies kann die Adaptierbarkeit der zumindest zwei Echtzeit-Softwaremodule in vorteilhafter Weise unterstützen.

In einigen Fällen kann somit eine Isolation von Echtzeit-Softwaremodulen, z.B. durch Betriebssystemprozesse, relativ zueinander ermöglicht werden, wodurch letztlich die Einflussnahme einzelner Echtzeit-Softwaresysteme aufeinander verringert oder unterbunden werden kann.

Gemäß eines Ausführungsbeispiels kann das Bereitstellen der Ressourcenbedarfskonfiguration und/oder der Ressourcenangebotskonfiguration und/oder der Zuweisungskonfiguration ein Bereitstellen je einer entsprechenden Konfigurationsdatei umfassen.

Die Konfigurationsdatei kann als eine Textdatei bereitgestellt werden, welche als eine Auflistung des Ressourcenbedarfs und/oder des Ressourcenangebots fungieren kann. Die Zuweisungskonfiguration kann eine Auflistung enthalten, welche Ressourcen des Ressourcenangebots auf Ressourcen des Ressourcenbedarfs abgebildet bzw. gebunden werden. Die Ressourcenbedarfskonfiguration und/oder die Ressourcenangebotskonfiguration und/oder die Zuweisungskonfiguration kann als eine binäre Datei vorliegen.

In einigen beispielhaften Fällen kann für jedes der N Echtzeit-Softwaremodule je eine Konfigurationsdatei bereitgestellt werden. So kann z.B. für jedes der N Echtzeit-Softwaremodule je eine Ressourcenbedarfskonfiguration bereitgestellt werden. Alternativ kann auch eine Konfigurationsdatei für alle N Echtzeit-Softwaremodule bereitgestellt werden. Zusätzlich oder alternativ kann eine Ressourcenbedarfskonfiguration den Ressourcenbedarf für weniger als N Echtzeit-Softwaremodule umfassen (z.B. für N-1 Echtzeit-Softwaremodule).

Durch Bereitstellen der Ressourcenbedarfskonfiguration und/oder der Ressourcenangebotskonfiguration und/oder der Zuweisungskonfiguration als Konfigurationsdatei kann eine effiziente Portabilität der entsprechenden Konfiguration erreicht werden und diese in effizienter Weise zwischen mehreren Entitäten transferiert werden (z.B. von einem PC eines Entwicklers eines Echtzeit-Softwaremoduls auf das Hardwaresystem, etc.). Durch Bereitstellen der Konfigurationsdatei kann ferner erreicht werden, dass die Ressourcenbedarfskonfiguration und/oder die Ressourcenangebotskonfiguration und/oder die Zuweisungskonfiguration maschinenlesbar ist und damit (automatisiert) durch z.B. das Hardwaresystem verarbeitbar ist.

Gemäß einer weiteren Ausführungsform kann das Bereitstellen der Ressourcenbedarfskonfiguration, der Ressourcenangebotskonfiguration und das Erstellen der Zuweisungskonfiguration durch zumindest zwei verschiedene Entitäten, bevorzugt durch drei verschiedene Entitäten erfolgen.

In einem möglichen Beispiel kann z.B. die Ressourcenbedarfskonfiguration und die Zuweisungskonfiguration durch die gleiche Entität erfolgen. Alternativ kann es auch möglich sein, dass die Ressourcenbedarfskonfiguration und die Ressourcenangebotskonfiguration durch die gleiche Entität bereitgestellt werden. Alternativ kann es auch möglich sein, dass die Ressourcenbedarfskonfiguration, die Ressourcenangebotskonfiguration und die Zuweisungskonfiguration durch die gleiche Entität bereitgestellt werden.

Auf diese Weise kann ermöglicht werden, dass ein Ersteller der Ressourcenbedarfskonfiguration von einem Ersteller der Ressourcenangebotskonfiguration und/oder einem Ersteller der Zuweisungskonfiguration verschieden ist. Auf diese Weise kann erreicht werden, dass es nicht mehr erforderlich ist, dass z.B. ein Entwickler eines Echtzeit-Softwaresystems (z.B. eines Echtzeit-Softwaresystems der N Echtzeit-Softwaresysteme) auch (vollständige) Kenntnis über ein auf dem Hardwaresystem vorhandenes Ressourcenangebot haben muss.

Gemäß einer weiteren Ausführungsform kann das Bereitstellen der Ressourcenbedarfskonfiguration durch einen Entwickler des Softwaremoduls erfolgen und/oder das Bereitstellen der Ressourcenangebotskonfiguration durch einen Hersteller und/oder Integrierer des Hardwaresystems und/oder das Erstellen der Zuweisungskonfiguration durch einen Integrierer des Softwaremoduls erfolgen.

Unter einem Softwaremodul kann ein unabhängig entwickeltes ausführbares Softwareelement verstanden werden.

In einem möglichen Beispiel kann die Ressourcenbedarfskonfiguration durch einen Entwickler des Echtzeit-Softwaremoduls erfolgen, während die Ressourcenangebotskonfiguration durch einen Hersteller/Anbieter/Integrierers des Hardwaresystems erfolgen kann. In einigen Beispielen kann der Entwickler des Echtzeit-Softwaremoduls oder der Hersteller/Anbieter/Integrierer mit dem Integrierer des Echtzeit-Softwaremoduls auf dem Hardwaresystem funktionell zusammenfallen, sodass die drei zuvor genannten Ressourcenkonfigurationen alleinig durch diese beiden Entitäten bereitgestellt werden können. Alternativ kann es auch möglich sein, dass das Bereitstellen der Zuweisungskonfiguration nicht durch den Entwickler des Echtzeit-Softwaremoduls oder den Hersteller/Anbieter/Integrierer des Hardwaresystems erfolgt, so dass die zuvor genannten Ressourcenkonfigurationen durch insgesamt drei Entitäten bereitgestellt werden.

Auf diese Weise kann eine effiziente Ressourcenallokation erfolgen, da die Aufgabe des Bereitstellens einer entsprechenden Ressourcenkonfiguration exklusiv auf solche Entitäten verteilt werden kann, die über den Ressourcenbedarf/das Ressourcenangebot bestmöglich informiert sind. Auf diese Weise kann vermieden werden, dass eine Entität ein generisches Wissen über sowohl den Ressourcenbedarf als auch das Ressourcenangebot vorhalten muss und ggf. hieraus resultierende Fehler bzw. ineffiziente Ressourcenzuweisungen unterbunden werden. Des Weiteren kann so erreicht werden, dass ein Echtzeit-Softwaremodul für den Einsatz auf vielen verschiedenen Hardwaresystemen adaptiert werden kann, da eine finale Ressourcenzuweisung erst zum Zeitpunkt der Integration des Echtzeit-Softwaremoduls erfolgen muss.

Gemäß einer weiteren Ausführungsform kann das Erstellen der Zuweisungskonfiguration durch eine manuelle Benutzereingabe erfolgen.

Das Erstellen der Zuweisungskonfiguration kann z.B. durch ein Abbilden des Ressourcenangebots auf den Ressourcenbedarf der N Echtzeit-Softwaremodule erfolgen.

Die manuelle Benutzereingabe kann durch Anlegen einer entsprechenden Zuweisungskonfiguration mittels Interaktion einer Entität der physikalischen Welt (z.B. eines Entwicklers des Echtzeit-Softwaremoduls oder des Herstellers/Anbieter/Integrierers des Hardwaresystems und/oder Integrierers) und einem Computer erfolgen (z.B. über eine Benutzerschnittstelle wie z.B. einer Tastatur).

Durch Erstellen der Zuweisungskonfiguration durch eine manuelle Benutzereingabe kann eine Integration der N Echtzeit-Softwaremodule durch den Integrierer der N Echtzeit-Softwaremodule ermöglicht werden, welcher idealerweise die Anforderungen an die Performance bzw. Eigenschaften der implementierten N Echtzeit-Softwaremodule auf dem Hardwaresystem bestmöglich kennt. Somit kann die Ressourcenzuweisung an die N Echtzeit-Softwaremodule auf den konkreten Feldeinsatz zugeschnitten werden. In einigen Fällen kann dabei auch der Erfahrungsschatz, der die Zuweisungskonfiguration erstellenden Entität berücksichtigt werden. Ferner kann dieser Aspekt der Erfindung eine vereinfachte und nachvollziehbarere Zuweisung bestehender physikalischer Ressourcen (gemäß dem Ressourcenangebot) an die jeweiligen Echtzeit-Softwaremodule (gemäß deren Ressourcenbedarf) ermöglichen, indem eine logische Trennung zwischen der Entwicklung der Echtzeit-Softwaremodule und deren Ausführung erfolgt.

Gemäß einer weiteren Ausführungsform kann das Erstellen der Zuweisungskonfiguration automatisiert, bevorzugt durch ein trainiertes neuronales Netz erfolgen.

Durch ein automatisiertes Erstellen der Zuweisungskonfiguration kann insb. eine durch Computer verarbeitbare und zeiteffiziente Zuweisung des Ressourcenangebots an die N Echtzeit-Softwaremodule erfolgen. Insbesondere kann durch Einbinden eines neuronalen Netzes in das Erstellen der Zuweisungskonfiguration eine Verbesserung, idealerweise eine Optimierung der Ressourcenzuweisung erfolgen. In einigen beispielhaft genannten Fällen kann so z.B. eine Ressourcenzuweisung so erfolgen, dass eine interne Fragmentierung zugewiesener Ressourcen (z.B. bzgl. eines Arbeitsspeichers) minimiert wird. Zusätzlich oder alternativ kann z.B. die Verwendung eines neuronalen Netzes auch die Möglichkeit einer präemptiven Ressourcenzuweisung ermöglichen, indem das neuronale Netz z.B. auch mögliche zukünftig noch zu implementierende Echtzeit-Softwaremodule prädiktiv vorhersieht (z.B. basierend auf Korrelationsanalysen) und diesbezüglich bereits vorausschauend eine dafür notwendige Ressourcenallokation einplant und/oder vornimmt, so dass eine effiziente und feingranulare Ressourcenzuweisung ermöglicht werden kann.

Gemäß einer weiteren Ausführungsform können die N Echtzeit-Softwaremodule durch Prozesse des Betriebssystems voneinander isoliert werden, um eine gegenseitige Einflussnahme der Echtzeit-Softwaremodule aufeinander zu verringern.

Unter einem Prozess eines Betriebssystems kann in diesem Zusammenhang ein Computerprogramm zur Laufzeit verstanden werden. Die betreffenden Computerprogramme können in verschiedene, autarke Prozessräume getrennt werden, wobei den Prozessräumen eigene Adressräume für einen Speicherzugriff zugewiesen werden können.

Prozesse eines Betriebssystems können verwendet werden, um für verschiedene Echtzeit-Softwaremodule aus Sicht des Betriebssystems eine logische Trennung zu vollziehen. Die einzelnen Prozesse können aus Sicht des Betriebssystems voneinander unabhängig sein, so kann z.B. jeder Prozess eine eigene Sicht auf Systemressourcen (z.B. Speicher) haben und kann unabhängig von anderen Prozessen vom Betriebssystem verwaltet werden.

Ferner kann es durch die Trennung in getrennte Prozesse nun auch für Echtzeit-Softwaremodule ermöglicht werden, getrennte Ressourcen, z.B. CPU-Kerne, für diese getrennten Echtzeit-Softwaremodule zentral zu koordinieren. Diese Ressourcen können dann auch noch für die Verwendung der jeweiligen Echtzeit-Softwaremodule isoliert und explizit zugewiesen werden. Somit kann eine logische Trennung der Echtzeit-Softwaremodule untereinander durch Betriebssystemmechanismen und durch Hardwareressourcen erreicht werden, wodurch die Unabhängigkeit der Echtzeitapplikationen zur Laufzeit voneinander gestärkt werden kann.

Auf diese Weise kann verhindert werden, dass sich die N Echtzeit-Softwaremodule gegenseitig blockieren, indem diese ansonsten z.B. auf gemeinsame genutzte Ressourcen zugreifen. Auf diese Weise kann in vorteilhafter Weise erreicht werden, dass die mit der Ausführung der Echtzeit-Softwaremodule assoziierte Rechenzeit/Ausführungszeit der Echtzeitapplikationen möglichst störunempfindlich und damit deterministisch wird, was vorteilhaft zu einem Einhalten der Echtzeitbedingungen beitragen kann.

Gemäß einer weiteren Ausführungsform können die N Echtzeit-Softwaremodule konfiguriert sein zusammenzuwirken, um eine Steuerungsaufgabe einer Industrieanlage auszuführen.

Unter einer Steuerungsaufgabe kann die Gesamtheit aller Aufgabenstellungen verstanden werden, die benötigt werden, um einen industriellen Automatisierungsprozess zu steuern.

Eine Industrieanlage kann z.B. als Teil einer industriellen Fertigungsstraße verstanden werden entlang derer ein Produkt hergestellt wird und/oder modifiziert wird. In einigen beispielhaften Implementierungsszenarien kann unter einer Industrieanlage auch eine gesamte Fertigungsstraße und/oder eine gesamte Fabrik (z.B. auch inklusive des Zusammenwirkens aller dort vorkommenden Entitäten) verstanden werden.

Die Erfindung kann damit eine feingranulare Entwicklung der Echtzeit-Softwaremodule ermöglichen, indem die jeweiligen Echtzeit-Softwaremodule spezifisch für zu erfüllende (Unter-) Aufgaben entwickelt werden. Diese feingranulare Entwicklung der Echtzeit-Softwaremodule kann damit eine verbesserte Adaptierung dieser an situative Gegebenheiten ermöglichen und deren Wartbarkeit verbessern. Ferner kann dies zu einem synergistischen Zusammenwirken der einzelnen Echtzeit-Softwaremodule beitragen.

Unter Unteraufgaben kann in diesem Kontext z.B. ein Lesen von Eingaben von Sensoren und ein Bereitstellen entsprechender Daten auf einer gemeinsamen Datenschnittstelle verstanden werden. Zusätzlich oder alternativ kann unter einer Unteraufgabe auch ein Verarbeiten von Sensorinformationen durch Programme, um z.B. Steuerungsalgorithmen zu implementieren (z.B. PID-Regler, Conveyor Steuerung, Lichtschrankenauswertung) bzw. eine generelle Automatisierung von Prozessabläufen verstanden werden. Zusätzlich oder alternativ kann unter einer Unteraufgabe eine Steuerung von Bewegungsachsen oder Robotern (Motion Control), eine Bereitstellung von Prozessdaten an ein human machine interface (HMI), ein Schreiben von Steuergrößen und/oder-signalen an Prozessausgaben (z.B.: Aktuatoren, Motoren, Lichter, etc.) verstanden werden.

Gemäß einer weiteren Ausführungsform können die Ressourcen der Ressourcenbedarfskonfiguration und die Ressourcen der Ressourcenangebotskonfiguration mit einer Anzahl von CPU-Kernen, einem Arbeitsspeicher, einem Festplattenspeicher, einem Cachespeicher, einer Priorisierung und/oder einer Zykluszeit eines Echtzeit-Softwaremoduls assoziiert sein.

Auf diese Weise kann insbesondere eine effiziente Ressourcennutzung solcher Ressourcen ermöglicht werden, welche eine besondere Relevanz für die Performance der zu implementierenden Echtzeit-Softwaremodule darstellen kann.

Gemäß einer weiteren Ausführungsform kann ein nachträgliches Hinzufügen eines N+1-ten Echtzeit-Softwaremoduls zu dem Hardwaresystem die an die N Echtzeit-Softwaremodule zugewiesenen Ressourcen unverändert lassen.

Analog kann auch das Hinzufügen eines N+i-ten Echtzeit-Softwaremoduls, mit i ≥ 1, zu dem Hardwaresystem die bereits an die N Echtzeit-Softwaremodule zugewiesenen Ressourcen unverändert lassen.

Diese kann eine effiziente Funktionserweiterung des synergistischen Zusammenwirkens der N+1 Echtzeit-Softwaremodule ermöglichen ohne eine bereits erfolgte Ressourcenallokation nachträglich, nämlich bei Hinzufügen des N+1-ten Echtzeit-Softwaremoduls, abändern zu müssen. Dies kann in vorteilhafter Weise zu einer verbesserten Planungseffizienz beitragen und eine zugrundeliegende Koordinierungskomplexität in vorteilhafter Weise verringern.

Gemäß einer weiteren Ausführungsform kann das Betriebssystem ein Linux-Betriebssystem mit Echtzeiterweiterung sein.

In einigen Beispielen kann das Hardwaresystem als ein kommerziell erhältlicher generischer Personal Computer (PC) oder als ein generischer Server (d.h. ein Server, der zum Zeitpunkt des Verkaufs nicht spezifisch für eine erfindungsgemäße Nutzung vorkonfiguriert wurde und auch für andere Einsatzgebiete benutzt werden könnte) bereitgestellt werden. Alternativ kann es auch möglich sein, das Hardwaresystem als eine proprietäre (z.B. eine gezielt auf eine Steuerungsaufgabe zugeschnittene) Hardware bereitzustellen.

Somit kann eine kostengünstige und auf der Integration generalistischer Komponenten implementierbare Steuerung einer Industrieanlage ermöglicht werden.

Die jeweiligen Software-Module können klein dimensioniert (d.h. auf ihren nötigen Funktionsumfang beschränkt) und auf bestimmte (Teil-)Aufgaben beschränkt sein. Ferner kann an die Echtzeit-Softwaremodule die Anforderung gestellt werden, gut voneinander isoliert zu sein (Prozesstrennung), d.h. sie sollten keine wechselseitigen Abhängigkeiten voneinander aufweisen. Ferner wird an die Echtzeit-Softwaremodule häufig die Anforderung gestellt, dass diese, obwohl sie ggf. aus unterschiedlichen Quellen (d.h. von unterschiedlichen Entwicklern) stammen, dennoch zu einer Gesamtsteuerungsaufgabe kombiniert werden können müssen. Ferner sind in vielen Fällen die Entwickler der Echtzeit-Softwaremodule und ein Systemintegrierer, d.h. eine das Echtzeit-Softwaremodul integrierende Einheit (z.B. eine Person, eine als Integrierer agierende Softwarelösung, etc.) unterschiedliche Entitäten, d.h. keine der Einheiten überblickt notwendigerweise alle Charakteristika der Echtzeit-Softwaremodule (z.B. deren Ressourcenbedarf) und/oder das von dem Hardwaresystem zur Verfügung gestellte Ressourcenangebot.

Ein zweiter Aspekt der Erfindung bezieht sich auf ein Computerprogrammprodukt, umfassend Befehle, die bei der Ausführung des Programms durch einen Computer diesen veranlassen, das Computer-implementierte Verfahren nach einem der oben genannten Ausführungsformen auszuführen.

Ein Computerprogrammprodukt, wie z.B. ein Computerprogrammmittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ein dritter Aspekt der Erfindung bezieht sich auf eine Computer-implementierte Vorrichtung zur Ressourcenzuweisung an N, mit N ≥ 2, Echtzeit-Softwaremodule, welche auf einem gleichen Hardwaresystem unabhängig voneinander ausgeführt werden. Die Computer-implementierte Vorrichtung kann eine Bereitstellungseinheit zum Bereitstellen einer Ressourcenbedarfskonfiguration für jedes der N Echtzeit-Softwaremodule umfassen, wobei die Ressourcenbedarfskonfiguration einen Ressourcenbedarf zum Betreiben eines jeweiligen Softwaremoduls anzeigt sowie eine weitere Bereitstellungseinheit zum Bereitstellen einer Ressourcenangebotskonfiguration, welche ein Ressourcenangebot des Hardwaresystem anzeigt und eine Vergleichseinheit zum Vergleichen des durch die Ressourcenangebotskonfiguration angezeigten Ressourcenangebots mit dem durch die Ressourcenbedarfskonfiguration angezeigten Ressourcenbedarfs. Ferner kann die Computer-implementierte Vorrichtung eine Bestimmungseinheit zum Bestimmen, basierend auf dem Vergleichen, ob das durch die Ressourcenangebotskonfiguration angezeigte Ressourcenangebot ausreichend ist, um die N Echtzeit-Softwaremodule auf dem Hardwaresystem auszuführen umfassen sowie eine Erstellungseinheit zum Erstellen einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist und eine Übergabeeinheit zum Übergeben der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration.

Unter Ressourcen können z.B. eine Anzahl von CPU-Kernen und/oder CPUs, eine Zuweisung eines Arbeitsspeichers und/oder eines Festplattenspeicher und/oder eines Cachespeichers, einer Priorisierungsstufe (z.B. um eine Rangordnung für die Zuweisung von Ressourcen zu definieren) und/oder einer Zykluszeit eines Echtzeit-Softwaremoduls (z.B. ein Zeitlimit innerhalb welchem eine bestimmte Kontrollaufgabe abgeschlossen sein muss oder sollte) verstanden werden. Es sei jedoch angemerkt, dass mögliche Ressourcen nicht hierauf beschränkt sind, sondern dass auch andere Ressourcen gemäß Aspekten der vorliegenden Erfindung zugewiesen werden können.

Gemäß einer Ausführungsform kann die Computer-implementierte Vorrichtung ferner eine Ausführungseinheit zum Ausführen des Computer-implementierten Verfahrens wie hierin beschrieben umfassen.

Die Ausführungseinheit kann einen Prozessor, einen digital signal processor (DSP), eine central processing unit (CPU), einen application-specific integrated circuit (ASIC), ein fieldprogrammable gate array (FPGA), einen Mikrokontroller, eine Transistorlogik und/oder andere programmierbare Logikgeräte oder deren teilweise Kombination umfassen.

Ein vierter Aspekt der Erfindung bezieht sich auf ein System zur Ressourcenzuweisung an N, mit N ≥ 2, Echtzeit-Softwaremodule, welche auf einem gleichen Hardwaresystem ausgeführt werden. Das System umfasst die Computer-implementierte Vorrichtung wie oben beschrieben sowie das Computerprogrammprodukt wie oben beschrieben.

Das Computerprogrammprodukt kann in der Computer-implementierten Vorrichtung enthalten sein. In alternativen Beispielen kann das Computerprogramm auch in einer von der Computer-implementierten Vorrichtung entfernt vorgehaltenen Einheit enthalten sein. In letzterem beispielhaft genannten Fall kann die Computer-implementierte Vorrichtung über ein Netzwerk (z.B. ein lokales Netzwerk oder das Internet) oder eine USB-Verbindung auf das Computerprogrammprodukt zugreifen.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Insbesondere sei angemerkt, dass das oben beschriebene Verfahren bzw. die oben beschriebene Vorrichtung, das oben beschriebene Computerprogrammprodukt sowie das System nicht streng auf den beschriebenen Anwendungskontext beschränkt ist, sondern auch in anderen industriellen Kontexten Anwendung finden kann.
Fig 1 zeigt ein exemplarisches Zusammenwirken von Systemdiensten zur Verwaltung, Bereitstellung und Überwachung einer Echtzeitablaufumgebung für Echtzeit-Softwaremodule;
Fig. 2 zeigt ein schematisches Systemdiagramm eines modularen industriellen Steuerungssystems;
Fig. 3 zeigt ein Ablaufdiagramm eines exemplarischen Computer-implementierten Verfahrens zur Ressourcenzuweisung an N, mit N ≥ 2 Echtzeit-Softwaremodule;
Fig. 4 zeigt eine exemplarische Computer-implementierten Vorrichtung zur Ressourcenzuweisung an N, mit N ≥ 2 Echtzeit-Softwaremodule; und
Fig. 5 zeigt ein System zur Ressourcenzuweisung an N, mit N ≥ 2 Echtzeit-Softwaremodule.

In den Figuren sind gleiche oder funktionsgleiche Elemente mit denselben Bezugszeichen versehen worden, sofern nichts anderes angegeben ist.

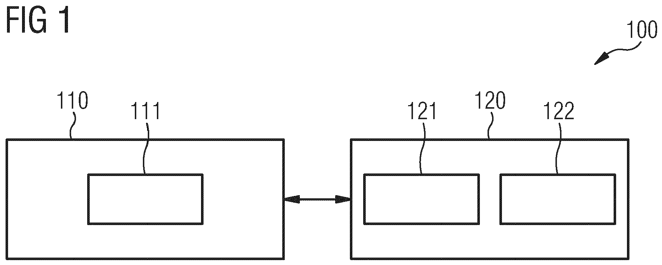

Fig. 1 zeigt ein exemplarisches Systemdiagramm 100 des Zusammenwirkens von Systemdiensten zur Verwaltung, Bereitstellung und Überwachung einer Echtzeitablaufumgebung für Echtzeit-Softwaremodule gemäß einem Aspekt der vorliegenden Erfindung. Insbesondere zeigt Fig. 1 dabei das Zusammenwirken einer auszuführenden Benutzeranwendung und Diensten, welche zur Ressourcenallokation zum Ausführen der Benutzeranwendung erforderlich sind.

Das modularisierte industrielle Steuerungssystem 100 kann eine Applikation 110 (oder mehrere Applikationen 110) sowie einen Basisdienst 120 zur Verwaltung von Echtzeitressourcen eines Hardwaresystems sowie zur Überwachung von Echtzeit-Softwaremodulen umfassen. Basisdienst 120 kann als Systemdienst zur Verwaltung, Bereitstellung und Überwachung der Echtzeitablaufumgebung für Echtzeit-Module fungieren.

Der Basisdienst 120 kann durch ein Zusammenspiel einer Ressourcenangebotskonfiguration 121 eines betrachteten Hardwaresystems sowie der Zuweisungskonfiguration 122 konfiguriert werden.

Auf dem Hardwaresystem auszuführende Echtzeit-Softwaremodule können sich bei dem Basisdienst 120 registrieren und basierend darauf kann deren Ressourcenbedarf (z.B. ausgedrückt durch eine Ressourcenangebotskonfiguration) auf physisch vorhandene Ressourcen abgebildet werden.

Der Basisdienst 120 kann ferner konfiguriert sein, zur Laufzeit das Einhalten von Echtzeitanforderungen zu überwachen und ungültige Anforderungen abzulehnen.

Der Basisdienst 120 kann auch Mittel vorsehen (z.B. unter Verwendung des Betriebssystems) einen Laufzeitkontext für die Applikation aufzusetzen und zu konfigurieren, so dass die Laufzeitanforderungen der Echtzeit-Softwaremodule bestmöglich erfüllt werden können.

In der Applikation 110 kann eine Softwarebibliothek (SDK) 111 existieren, in welchem eine Anbindung der Echtzeit-Applikationen an Echtzeit-Services erfolgt, so dass ein Austausch der Applikation mit dem Basisdienst 120 bidirektional erfolgen kann.

Der Ablauf der Anmeldung eines Echtzeit-Softwaremoduls bei dem Basisdienst 120 kann exemplarisch, wie im Folgenden beschrieben, ablaufen:
Ein Echtzeitsystemdienst (Basisdienst) 120 kann gestartet werden und kennt bereits ein auf einem Hardwaresystem zur Verfügung stehendes Ressourcenangebot.

Anschließend können Echtzeit-Softwaremodule gestartet werden und sich bei dem Basisdienst 120 registrieren. Der Basisdienst 120 kann vom Engineering (Deployment) eine Ressourcenzuordnung erhalten.

Basierend auf der Ressourcenzuordnung können nachfolgend die entsprechenden Ressourcen (physisch) an die Echtzeit-Softwaremodule zugewiesen werden oder abgelehnt werden.

Zur Laufzeit der Echtzeit-Softwaremodule kann der Basisdienst 120 die Laufzeiteigenschaften bzgl. der erforderlichen Anforderungen überwachen und protokolliert und/oder meldet etwaige auftretende Verletzungen dieser.

Wird ein Echtzeit-Softwaremodul gestoppt bzw. dessen Ablauf beendet, so werden diese Echtzeit-Softwaremodule vom Basisdienst 120 abgemeldet bzw. de-registriert und die dem Echtzeit-Softwaremodul zugewiesenen Ressourcen wieder freigegeben.

Durch eine Rekonfiguration des Basisdienstes 120 kann es ermöglicht werden, die Ressourcenzuordnung zu ändern und/oder zu optimieren.

Die Software-Bibliothekskomponente, die in Echtzeit-Softwaremodulen verwendet wird, muss registriert und in den Basisdienst 120 integriert werden.

Es handelt sich dabei um eine Komponente, die Echtzeitanforderungen und die Registrierung von Uhren abwickelt, sowie die Sammlung von Echtzeitdaten.

Der Basisdienst 120 bietet Flexibilität für Anwendungen, um Prozessor-Kerne für ihre Echtzeitanforderungen zu konfigurieren. Eine Anwendung kann spezifische Prozessorkerne für ihre Aufgaben konfigurieren, um den Determinismus ihrer Echtzeitverhaltensweise sicherzustellen. Neben isolierten Kernen kann eine Anwendung auch geteilte Kerne für die Ausführung ihrer Aufgaben verwenden. Zudem können Anwendungen einen Prozessor-Kern teilen, um mehrere Echtzeit-Aufgaben gleichzeitig auszuführen.

Anwendungen können Prozessor-Kerne konfigurieren, indem sie exemplarisch die folgenden zwei (Konfigurations-) Dateien verwenden:
- resource.layout.yml
- resource.binding.yml

Der folgende Abschnitt zeigt eine exemplarische Ressourcenbedarfskonfiguration wie diese z.B. gemäß einer Ausführungsform der vorliegenden Erfindung bereitgestellt werden könnte. Die nachfolgend angeführte Syntax der Ressourcenbedarfskonfiguration ist lediglich als exemplarisch zu verstehen. Es kann sich ebenfalls einer anderen Syntax bedient werden.

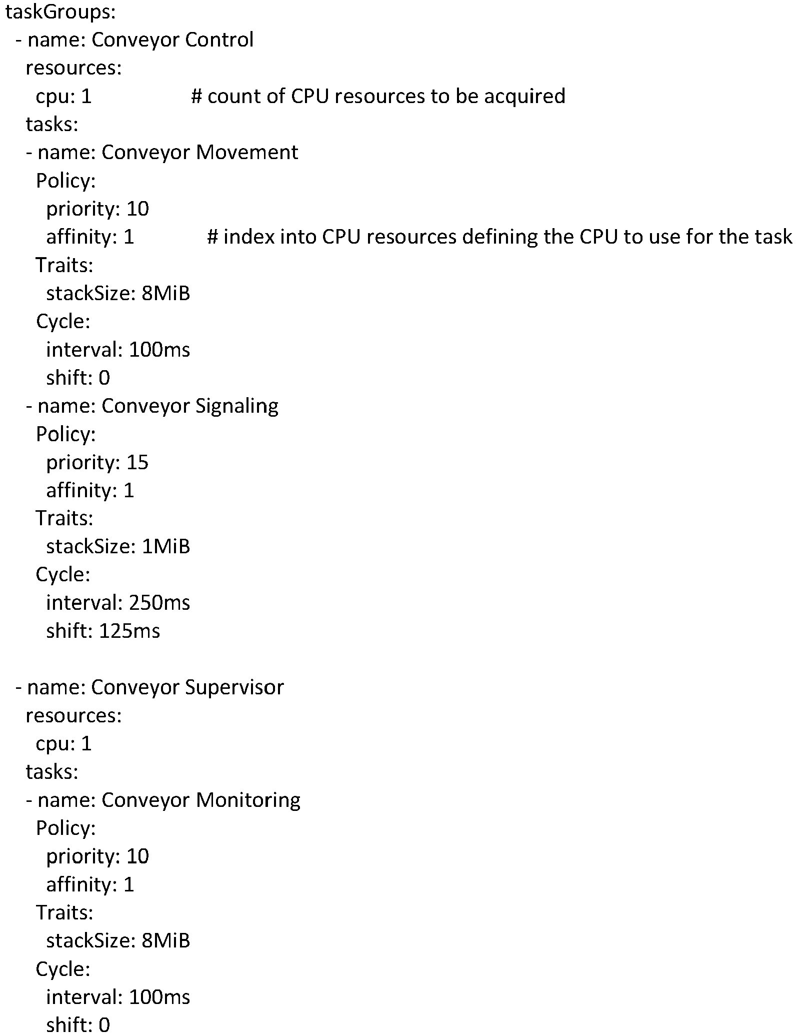

Mittels des Schlüsselworts *"taskGroups"* wird für eine Ressourcenbedarfskonfiguration (welche mit den Aufgaben eines Echtzeit-Softwaremoduls assoziiert sein kann) eine Charakterisierung des Ressourcenbedarfs für eine entsprechende *"taskGroup"* eingeleitet. Unter einer TaskGroup kann in diesem Zusammenhang eine logische Gruppierung von Echtzeit-Softwaremodulen (bzw. Echtzeitaufgaben) verstanden werden. Die TaskGroup kann eine Ressourcenzuordnung innerhalb von Applikationen dienen und als Schnittstelle zu einem globalen Ressourcenmanagement auf einem Hardwaresystem fungieren.

Das Schlüsselwort *"name"* gibt in diesem Fall einen Namen einer auszuführenden Kontrollaufgabe an, wie z.B. *"Conveyor Control*"*. "Conveyor Control"* kann ferner unterteilt werden in z.B. auszuführende Echtzeitanforderungen, welche z.B. durch Echtzeit-Softwaremodule mit den Namen *"Conveyor Movement'* und *"Conveyor Signaling"* oder *"Conveyor Supervisor"* realisiert werden.

Über das Schlüsselwort *"resources"* kann ein der auszuführenden Aufgabe zugeordneter Ressourcenbedarf konfiguriert werden. Über den Befehl *"cpu"* kann so z.B. angegeben werden, dass der auszuführenden Kontrollaufgabe mit dem Namen *"Conveyor Control"* ein CPU-Kern zugeordnet werden soll.

Für jede der Echtzeit-Softwaremodule *"Conveyor Signaling"* und *"Conveyor Supervisor*" kann auf diese Weise z.B. eine Priorität der Ausführung des jeweiligen Echtzeit-Softwaremoduls definiert werden, wobei die Priorität mittels eines Zahlenwertes angegeben werden kann. Ein höherer Zahlenwert kann mit einer höheren Priorität einer Ausführung des Echtzeit-Softwaremoduls assoziiert sein. Alternativ kann auch ein kleinerer Zahlenwert mit einer höheren Priorität einer Ausführung des Echtzeit-Softwaremoduls assoziiert sein. Liegen mehrere Echtzeit-Softwaremodule vor, welche bei beschränktem Ressourcenangebot ausgeführt werden sollen, so kann die Priorität dazu genutzt werden anzugeben, welches der Echtzeit-Softwaremodule zuerst, d.h. priorisiert ausgeführt werden soll (z.B. das Echtzeit-Softwaremodul, welchem eine höhere Priorität zugewiesen wurde).

Mittels des Schlüsselworts "*affinity*" kann angegeben werden, welcher CPU-Nummer, der vorab reservierten CPUs das konkrete Echtzeit-Softwaremodul zugeordnet werden soll.

Mittels des Schlüsselworts *"Traits"* können weiterführende Eigenschaften einer Echtzeitanforderung definiert werden, die nicht direkt mit einer zyklischen Abarbeitung assoziiert sind, wie z.B. eine Speichergröße eines Stackspeichers.

Mittels des Schlüsselworts *"stackSize"* kann es ermöglicht werden, für ein Echtzeit-Softwaremodul einen Speicherbedarf anzufragen (z.B. hinsichtlich eines Arbeitsspeichers). Mittels des Schlüsselworts *"Cycle"* kann es ermöglicht werden, Echtzeitbedingungen für das Echtzeit-Softwaremodul bereitzustellen. Mittels des Kommandos *"cycle"* kann diesbezüglich z.B. ein Zeitzyklus angegeben werden, gemäß welchem eine Kontrollaufgabe ausgeführt werden soll. Damit legt *"cycle"* eine entsprechende Echtzeitanforderung für die Kontrollaufgabe bzw. das jeweilige ausführende Echtzeit-Softwaremodul fest.

Mittels des Schlüsselworts "*shift*" kann es ermöglicht werden einen konkreten Startzeitpunkt einer Echtzeitaufgabe bzw. eines Echtzeit-Softwaremoduls relativ zu anderen Aufgaben mit derselben, oder auch untersetzten Zykluszeiten anzupassen. Beispielsweise könnte eine Aufgabe eine Zykluszeit von 10ms anfordern, möchte aber nicht zum Zeitpunkt "0ms" starten, sondern um 5ms verschoben (Phaseshift / Shift), so dass sie dann entsprechend bei 5ms, 15ms, 25ms, usw. ausgeführt werden kann. Im Vergleich dazu kann eine Aufgabe mit 0ms Shift mit 10ms Zyklus dann bei 0ms, 10ms, 20ms in Systemzeit laufen. Damit kann ein Effekt erzeugt werden, bei dem beide Aufgaben abwechselnd mit 5ms Versatz zur Ausführung kommen.

Die exemplarische Konfigurationsdatei resource.layout.yml kann das CPU-Kernlayout des Geräts in welchem die Echtzeitanforderungen ausgeführt werden spezifizieren.

Der folgende Abschnitt zeigt eine exemplarische Ressourcenangebotskonfiguration wie diese z.B. als Datei gemäß einer Ausführungsform der vorliegenden Erfindung bereitgestellt werden kann. Die Ressourcenangebotskonfiguration bezieht sich vorliegend z.B. auf eine Industriesteuervorrichtung, z.B. welche vier CPUs bzw. CPU-Kerne aufweist.
# Computation resources which specify the physical or virtual resources of the compute node,
# to be used by (real-time) applications during their runtime
cpuCores:
   - name: shared_core_x
      corelndex: 0
      coreType: shared
   - name: shared_core_y
      corelndex: 1
      coreType: shared
   - name: iso_core_x
      corelndex: 0
      coreType: isolated
   - name: iso_core_y
      corelndex: 1
      coreType: isolated

Die exemplarische Ressourcenangebotskonfiguration zeigt z.B. die Verfügbarkeit verschiedener CPUs bzw. CPU-Kerne an, was durch den Befehl *"cpuCores"* eingeleitet wird.

Jeder der CPU-Kerne kann mit einem Namen versehen werden, was z.B. durch den Befehl *"name"* angegeben werden kann, wobei vorliegend z.B. die Namen *"shared_core_x",* "*shared_core_y*", *"iso_core_x"* and *"iso_core_y"* vergeben wurden.

Mittels des Schlüsselworts *"CoreIndex"* kann ein Kern über dessen Index identifiziert werden. Dies ist keine tatsächliche Kernanzahl, sondern der Index des Kernes in der Liste tatsächlicher Kerne-Zahlen für den angegebenen Kern-Typ. Zum Beispiel, wenn die Kern-Indizes in dieser Datei 0 und 1 für isolierte Kern-Typ sind und die tatsächlichen Kerne-Zahlen auf dem Gerät 2 und 3 sind, dann kann Corelndex=0 auf die tatsächliche Kerne-Zahl 2 und Corelndex=1 auf die tatsächliche Kerne-Zahl 3 zugeordnet werden.

Die jeweiligen CPUs und/oder Kerne können als "*shared*" oder "*isolated*" bereitgestellt werden, was durch den Befehl *"coreType"* angegeben werden kann. Unter einer "*shared*" CPU kann dabei eine CPU verstanden werden, welche zwischen mehreren Echtzeit-Softwaremodulen geteilt werden kann. Unter einer "*isolated*" CPU wird die Definition einer CPU verstanden, welche lediglich isoliert, für sich allein betrachtet, benutzt werden kann und damit nicht zwischen mehreren Echtzeit-Softwaremodule geteilt werden kann.

Die folgenden Validierungs-Regeln können für die Einträge in dieser Konfigurationsdatei gelten:
- Kernname darf nicht wiederholt werden.
- Kernindex darf nicht wiederholt werden für den gleichen Kern-Typ.
- Kern-Typ sollte entweder "isolated" oder "shared" sein.

Die Anzahl der konfigurierten isolierten und gemeinsam verwendeten Prozessorkerne muss der Konfigurationsdatei eines ggf. verwendeten Linux-Betriebssystems entsprechen.

Die Anzahl der gemeinsam verwendeten CPU-Kerne entspricht der Gesamtanzahl der CPU-Kerne minus der Anzahl der isolierten CPU-Kerne. Zum Beispiel, wenn die Gesamt-CPUs "0-3" sind, dann ist die Anzahl 4, und wenn die isolierten CPU-Kerne "2-3" sind, dann ist die Anzahl 2. Nun ist die gemeinsam verwendete CPU-Anzahl 4 - 2 = 2.

Die Konfigurationsdatei resource.binding.yml spezifiziert die Bindungen zwischen den Anwendungs-TaskGroups und den CPU-Kernen.

Der folgende Abschnitt zeigt eine exemplarische Zuweisungskonfiguration wie diese z.B. als Datei gemäß einer Ausführungsform der vorliegenden Erfindung bereitgestellt werden kann.

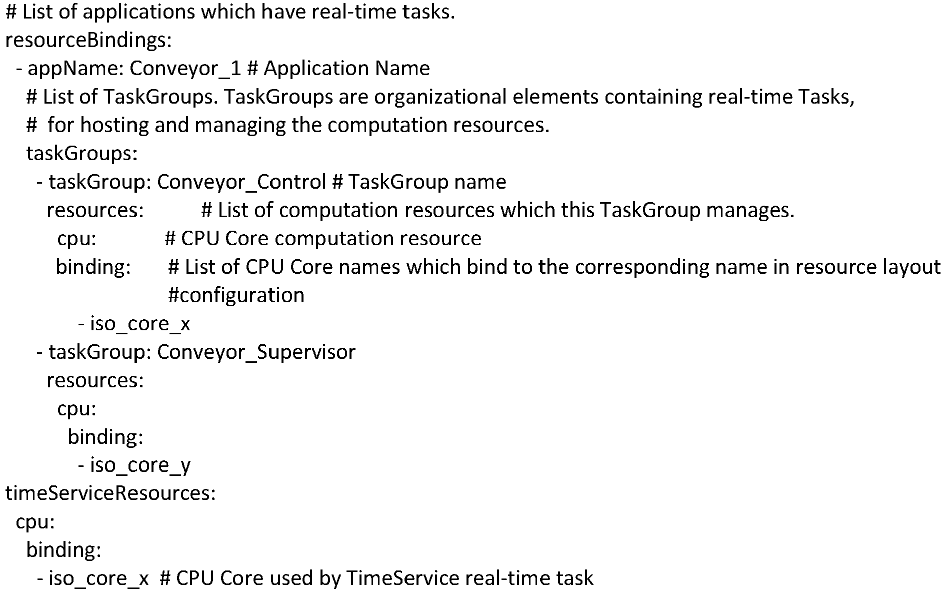

Mittels des Befehls "*resourceBindings*" wird hierbei exemplarisch eingeführt, dass sich die nachfolgende Konfiguration auf eine Zuweisung von Ressourcen der Ressourcenangebotskonfiguration zu Ressourcen der Ressourcenbedarfskonfiguration beziehen soll.

Mittels des Befehls *"appName"* wird dabei explizit eine Anwendung angesprochen, für die die nachfolgende Ressourcenzuweisung erfolgen soll, hier "*Conveyor_1*". Mittels des Befehls *"taskGroup"* als Teil des Befehls *"taskGroups"* wird vorliegend eingeleitet, dass der auszuführenden Kontrollaufgabe mit dem Namen "*Conveyor_Control*" nachfolgend Ressourcen zugewiesen werden sollen. Analoges gilt für "*Conveyor_Supervisor*"*.*

Mittels *"resources"* werden Ressourcen angeführt, welche durch die *"TaskGroup"* verwaltet werden.

Mittels *"cpu"* werden schließlich CPU-Ressourcen angeführt, welche zu Berechnungszwecken zugewiesen werden können.

Nach dem Schlüsselwort *"binding"* werden die Namen der CPU-Kernnamen aufgeführt, welche an ein Echtzeit-Softwaremodul zugewiesen werden sollen. Im Falle von "*Conveyor_Control*" erfolgt z.B. eine Zuweisung des CPU-Kerns *"iso_core_x"* während im Falle von "*Conveyor_Supervisor*" z.B. eine Zuweisung des CPU-Kerns *"iso_core_y"* erfolgt.

Analoges folgt für die Zuweisung der Ressourcen für den Basisdienst TimeService im Abschnitt *"timeServiceResources".* Vorliegend wird diesem unter *"binding"* der CPU-Kern *"iso_core_x"* zugewiesen.

Nach dem Schlüsselwort *"binding"* können dann solche Ressourcen angeführt werden, welche einem jeweiligen Echtzeit-Softwaremodul zugewiesen werden sollen.

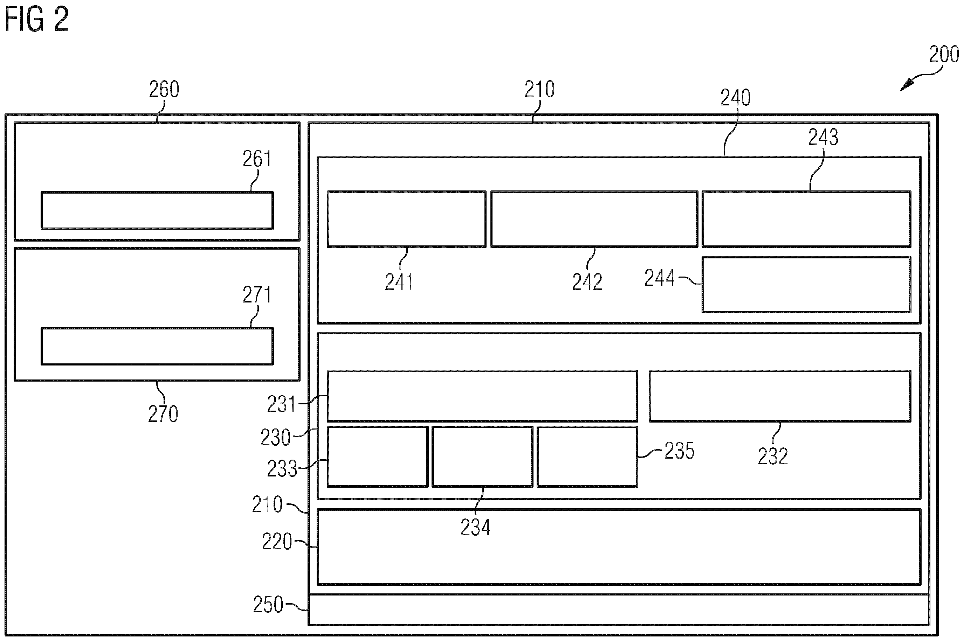

Fig. 2 zeigt ein schematisches Systemdiagramm eines modularen industriellen Steuerungssystems 200 gemäß Aspekten der vorliegenden Erfindung.

Das modulare industrielle Steuerungssystem 200 umfasst eine Runtime 210.

Die Runtime 210 umfasst im vorliegenden Beispiel eine Standard Linux Distribution 220 (bevorzugt eine Standard Linux Distribution 220 mit präemptiven Echtzeitanforderungen und Echtzeit-Tuning). Auf der Standard Linux Distribution 220 bauen Runtime Services 230 sowie Anwendungen 240 auf.

Unter Echtzeit-Tuning kann in diesem Kontext die weiterführende Konfiguration des Echtzeitbetriebssystems (z.B. Linux mit Echtzeiterweiterung) auf den konkreten Anwendungsfall verstanden werden. Das Echtzeitbetriebssystem kann Basismechanismen zur Verfügung stellen, welche konkret angepasst werden können/müssen, z.B. in Abhängigkeit von dem verwendeten Hardwaresystem, z.B. Isolation der CPU-Kerne, Interrupt-Bindung an Kerne für die verschiedenen Hardwaregeräte, Hyperthreading-Konfiguration für die Prozessorkerne, CPU thermisches Throttling oder Speed Modes, CPU Sleep Modes, Memory Paging Einstellungen, etc.

Die Runtime Services 230 umfassen Core Runtime Services 231 sowie optionale Runtime Services 232. Die Core Runtime Services 231, welche eine funktionelle Basis für die Implementierung von Echtzeitanforderungen bereitstellen können, können vorliegend einen Echtzeit-Uhren-Management-Dienst 233 (zum Bereitstellen eines Zeitgebers zum Ausführen von Echtzeit-Softwaremodulen), einen Echtzeit-Aufgaben-Management-Dienst 234 (z.B. zur Verwaltung auszuführender Echtzeitdienste) sowie Middleware 235 umfassen.

Die optionalen Runtime Services 232 können zusätzliche Runtime Services bereitstellen, welche ebenfalls Funktionalität für die Ausführung von Echtzeit-Softwaremodulen bereitstellen können, wie z.B. Diagnosetools, Alarmsysteme, Echtzeit-Aufgabenmanagement, Anwendungsmanagement, Application Tracing und Konfigurations- und Bereitstellungsdienste. Zusätzlich oder alternativ können die Optional Runtime Services auch von den Echtzeit-Softwaremodulen unabhängige Funktionalitäten bereitstellen.

Die Anwendungen 240 können Container-Anwendungen 241 (z.B. Docker-basierte Anwendungen), native Linux-Anwendungen 242 sowie Anwendungen mit harten Echtzeitanforderungen 243 umfassen.

Die Anwendungen mit harten Echtzeitanforderungen 243 können in einigen Fällen eine Echtzeit-Industriesteuerungs-API 244 bereitstellen.

Die Runtime 210 kann auf einer (virtualisierten) Hardware 250 aufgebaut sein.

Parallel zur Runtime 210 kann eine Development Einheit 260 bereitgestellt werden. Development Einheit 260 kann die Entwicklung von Anwendungen für die Runtime 210 ermöglichen. Development Einheit 260 kann z.B. ein SDK zur Entwicklung von Anwendungen für die Runtime 210 ermöglichen, wie z.B. die Entwicklung von Echtzeit-Softwaremodulen.

Development Einheit 260 kann ein modularisiertes Engineering System 261 umfassen.

Parallel zur Runtime 210 kann ferner eine Anwendungs- und Vorrichtungsmanagement Einheit 270 bereitgestellt werden.

Die Anwendungs- und Vorrichtungsmanagement Einheit 270 kann eine Edgevorrichtung 271 umfassen. Die Edgevorrichtung 271 kann so bereitgestellt werden, dass sie eine dezentrale Datenverarbeitung, z.B. am Rande eines Netzwerks, ermöglichen kann.

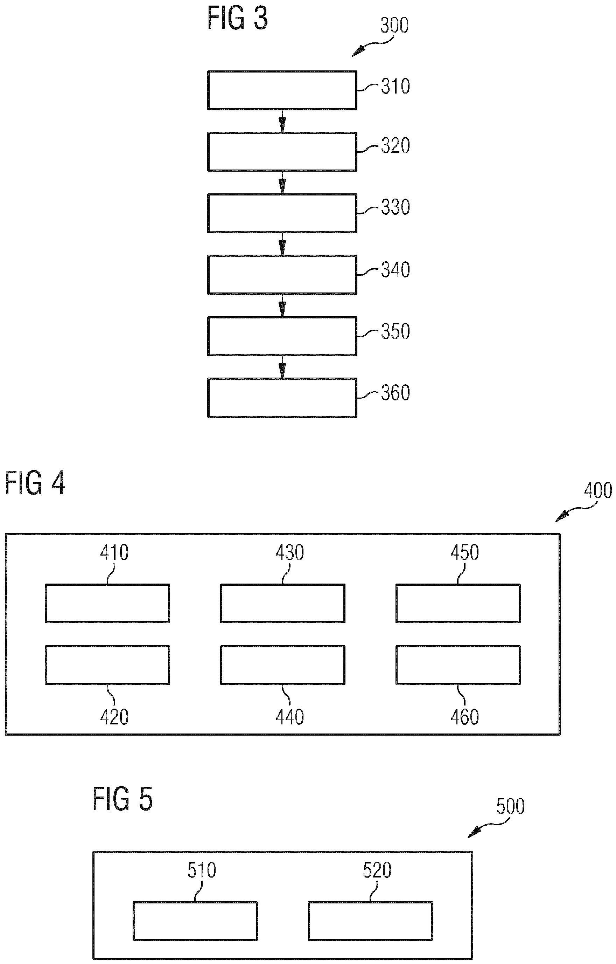

Fig. 3 zeigt ein Ablaufdiagramm eines exemplarischen Computer-implementierten Verfahrens 300 zur Ressourcenzuweisung an N, mit N ≥ 2 Echtzeit-Softwaremodule, welche auf einem gleichen Hardwaresystem unabhängig voneinander ausgeführt werden.

In Schritt 310 erfolgt ein Bereitstellen je einer Ressourcenbedarfskonfiguration für jedes der N Echtzeit-Softwaremodule, wobei die Ressourcenbedarfskonfiguration einen Ressourcenbedarf zum Betreiben eines jeweiligen Softwaremoduls anzeigt.

In Schritt 320 erfolgt ein Bereitstellen einer Ressourcenangebotskonfiguration, welche ein Ressourcenangebot des Hardwaresystem anzeigt.

In Schritt 330 erfolgt ein Vergleichen des durch die Ressourcenangebotskonfiguration angezeigten Ressourcenangebots mit dem durch die Ressourcenbedarfskonfiguration angezeigten Ressourcenbedarfs.

In Schritt 340 erfolgt ein Bestimmen, basierend auf dem Vergleichen, ob das durch die Ressourcenangebotskonfiguration angezeigte Ressourcenangebot ausreichend ist, um die N Echtzeit-Softwaremodule auf dem Hardwaresystem auszuführen.

In Schritt 350 erfolgt ein Erstellen einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist.

In Schritt 360 erfolgt ein Übergeben der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration.

Fig. 4 zeigt eine exemplarische Computer-implementierte Vorrichtung 400 zur Ressourcenzuweisung an N, mit N ≥ 2 Echtzeit-Softwaremodule, welche auf einem gleichen Hardwaresystem unabhängig voneinander ausgeführt werden. Computer-implementierte Vorrichtung 400 umfasst Bereitstellungseinheit 410, weitere Bereitstellungseinheit 420, Vergleichseinheit 430, Bestimmungseinheit 440, Erstellungseinheit 450 sowie Übergabeeinheit 460.

Bereitstellungseinheit 410 ist konfiguriert zum Bereitstellen je einer Ressourcenbedarfskonfiguration für jedes der N Echtzeit-Softwaremodule, wobei die Ressourcenbedarfskonfiguration einen Ressourcenbedarf zum Betreiben eines jeweiligen Softwaremoduls anzeigt.

Weitere Bereitstellungseinheit 420 ist konfiguriert zum Bereitstellen einer Ressourcenangebotskonfiguration, welche ein Ressourcenangebot des Hardwaresystem anzeigt.

Vergleichseinheit 430 ist konfiguriert zum Vergleichen des durch die Ressourcenangebotskonfiguration angezeigten Ressourcenangebots mit dem durch die Ressourcenbedarfskonfiguration angezeigten Ressourcenbedarfs.

Bestimmungseinheit 440 ist konfiguriert zum Bestimmen, basierend auf dem Vergleichen, ob das durch die Ressourcenangebotskonfiguration angezeigte Ressourcenangebot ausreichend ist, um die N Echtzeit-Softwaremodule auf dem Hardwaresystem auszuführen.

Erstellungseinheit 450 ist konfiguriert zum Erstellen einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist.

Übergabeeinheit 460 ist konfiguriert zum Übergeben der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration.

Fig. 5 zeigt ein System 500 zur Ressourcenzuweisung an N, mit N ≥ 2 Echtzeit-Softwaremodule, welche auf einem gleichen Hardwaresystem unabhängig voneinander ausgeführt werden.

System 500 umfasst die Computer-implementierte Vorrichtung 510 wie hierin beschrieben.

System 500 umfasst das Computerprogrammprodukt 520 wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Computer-implementiertes Verfahren (300) zur Ressourcenzuweisung an N, mit N ≥ 2, Echtzeit-Softwaremodule, welche auf einem gleichen Hardwaresystem unabhängig voneinander ausgeführt werden, umfassend:
Bereitstellen (310) einer Ressourcenbedarfskonfiguration für jedes der N Echtzeit-Softwaremodule, wobei die Ressourcenbedarfskonfiguration einen Ressourcenbedarf zum Betreiben eines jeweiligen Softwaremoduls anzeigt;
Bereitstellen (320) einer Ressourcenangebotskonfiguration, welche ein Ressourcenangebot des Hardwaresystem anzeigt;
Vergleichen (330) des durch die Ressourcenangebotskonfiguration angezeigten Ressourcenangebots mit dem durch die Ressourcenbedarfskonfiguration angezeigten Ressourcenbedarfs;
Bestimmen (340), basierend auf dem Vergleichen, ob das durch die Ressourcenangebotskonfiguration angezeigte Ressourcenangebot ausreichend ist, um die N Echtzeit-Softwaremodule auf dem Hardwaresystem auszuführen;
Erstellen (350) einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist;
Übergeben (360) der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration.

2. Computer-implementiertes Verfahren nach Anspruch 1, wobei das Bereitstellen der Ressourcenbedarfskonfiguration und/oder der Ressourcenangebotskonfiguration und/oder der Zuweisungskonfiguration ein Bereitstellen je einer entsprechenden Konfigurationsdatei umfasst.

3. Computer-implementiertes Verfahren nach einem der Ansprüche 1 oder 2, wobei das Bereitstellen der Ressourcenbedarfskonfiguration, der Ressourcenangebotskonfiguration und das Erstellen der Zuweisungskonfiguration durch zumindest zwei verschiedene Entitäten, bevorzugt durch drei verschiedene Entitäten erfolgt.

4. Computer-implementiertes Verfahren nach einem der Ansprüche 1 bis 3, wobei das Bereitstellen der Ressourcenbedarfskonfiguration durch einen Entwickler des Softwaremoduls erfolgt und/oder wobei das Bereitstellen der Ressourcenangebotskonfiguration durch einen Hersteller und/oder Integrierer des Hardwaresystems erfolgt und/oder wobei das Erstellen der Zuweisungskonfiguration durch einen Integrierer des Softwaremoduls erfolgt.

5. Computer-implementiertes Verfahren nach einem der Ansprüche 1-4, wobei das Erstellen der Zuweisungskonfiguration durch eine manuelle Benutzereingabe erfolgt.

6. Computer-implementiertes Verfahren nach einem der Ansprüche 1-5, wobei das Erstellen der Zuweisungskonfiguration automatisiert, bevorzugt durch ein trainiertes neuronales Netz erfolgt.

7. Computer-implementiertes Verfahren nach einem der Ansprüche 1-6, wobei die N Echtzeit-Softwaremodule durch Prozesse des Betriebssystems voneinander isoliert werden, um eine gegenseitige Einflussnahme der Echtzeit-Softwaremodule aufeinander zu verringern.

8. Computer-implementiertes Verfahren nach einem der Ansprüche 1-7, wobei die N Echtzeit-Softwaremodule konfiguriert sind zusammenzuwirken, um eine Steuerungsaufgabe einer Industrieanlage auszuführen.

9. Computer-implementiertes Verfahren nach einem der Ansprüche 1-8, wobei die Ressourcen der Ressourcenbedarfskonfiguration und die Ressourcen der Ressourcenangebotskonfiguration mit einer Anzahl von CPU-Kernen, einem Arbeitsspeicher, einem Festplattenspeicher, einem Cachespeicher, einer Priorisierung und/oder einer Zykluszeit eines Echtzeit-Softwaremoduls assoziiert ist.

10. Computer-implementiertes Verfahren nach einem der Ansprüche 1-9, wobei ein nachträgliches Hinzufügen eines N+1-ten Echtzeit-Softwaremoduls zu dem Hardwaresystem die an die N Echtzeit-Softwaremodule zugewiesenen Ressourcen unverändert lässt.

11. Computer-implementiertes Verfahren nach einem der Ansprüche 1-10, wobei das Betriebssystem ein Linux-Betriebssystem mit Echtzeiterweiterung ist.

12. Computerprogrammprodukt, umfassend Befehle, die bei der Ausführung des Programms durch einen Computer diesen veranlassen, das Computer-implementierte Verfahren nach einem der Ansprüche 1-11 auszuführen.

13. Computer-implementierte Vorrichtung (400) zur Ressourcenzuweisung an N, mit N ≥ 2, Echtzeit-Softwaremodule, welche auf einem gleichen Hardwaresystem unabhängig voneinander ausgeführt werden, umfassend:
Eine Bereitstellungseinheit (410) zum Bereitstellen je einer Ressourcenbedarfskonfiguration für jedes der N Echtzeit-Softwaremodule, wobei die Ressourcenbedarfskonfiguration einen Ressourcenbedarf zum Betreiben eines jeweiligen Softwaremoduls anzeigt;
Eine weitere Bereitstellungseinheit (420) zum Bereitstellen einer Ressourcenangebotskonfiguration, welche ein Ressourcenangebot des Hardwaresystem anzeigt;
Eine Vergleichseinheit (430) zum Vergleichen des durch die Ressourcenangebotskonfiguration angezeigten Ressourcenangebots mit dem durch die Ressourcenbedarfskonfiguration angezeigten Ressourcenbedarfs;
Eine Bestimmungseinheit (440) zum Bestimmen, basierend auf dem Vergleichen, ob das durch die Ressourcenangebotskonfiguration angezeigte Ressourcenangebot ausreichend ist, um die N Echtzeit-Softwaremodule auf dem Hardwaresystem auszuführen;
Eine Erstellungseinheit (450) zum Erstellen einer Zuweisungskonfiguration, welche dem Ressourcenbedarf gemäß der Ressourcenbedarfskonfiguration Ressourcen gemäß des Ressourcenangebots der Ressourcenangebotskonfiguration zuweist, falls bestimmt wurde, dass das Ressourcenangebot ausreichend ist;
Eine Übergabeeinheit (460) zum Übergeben der Zuweisungskonfiguration an ein Betriebssystem des Hardwaresystems zum Zuweisen von Ressourcen des Hardwaresystems an die N Echtzeit-Softwaremodule gemäß der Zuweisungskonfiguration.

14. Computer-implementierte Vorrichtung nach Anspruch 13, umfassend:
eine Ausführungseinheit zum Ausführen des Computer-implementierten Verfahrens nach einem der Ansprüche 1 bis 11.

15. System (500) zur Ressourcenzuweisung an N, mit N≥ 2, Echtzeit-Softwaremodule, welche auf einem gleichen Hardwaresystem ausgeführt werden, umfassend:
die Computer-implementierte Vorrichtung (510) nach einem der Ansprüche 13 oder 14; das Computerprogrammprodukt (520) nach Anspruch 12.
